# FASCICULE DE BREVET EUROPEEN

(11) **EP 3 591 635 B1**
(45) Date de publication et mention de la délivrance du brevet: **26.07.2023**
(21) Numéro de dépôt: 19183056.1
(22) Date de dépôt: 27.06.2019
(51) Int. Cl.: G08C 17/02

(54) **AMÉLIORATION DE LA COMMANDE DE RÉGLAGE D'UN OU PLUSIEURS DISPOSITIFS**
OPTIMIERUNG DER STEUERUNG EINER ODER MEHRERER VORRICHTUNGEN
IMPROVEMENT OF THE CONTROL OF ONE OR MORE DEVICES

(30) Priorité: 02.07.2018 FR 1856099
(43) Date de publication de la demande: 08.01.2020
(73) Titulaire: Orange, 92130 Issy-les-Moulineaux (FR)
(72) Inventeur: OTTOGALLI, François-Gaël, 92326 Chatillon Cedex (FR); RIERA, Julien, 92326 Chatillon Cedex (FR); ROUDET, Franck, 92326 Chatillon Cedex (FR); NICOL, Rozenn, 92326 Chatillon Cedex (FR)
(74) Mandataire: Plasseraud IP

(56) Documents cités:
- EP-A1- 3 312 946
- WO-A1-2011/018562

## Description

La présente invention concerne la commande de réglage d'un appareil, ou d'un ensemble d'appareils par exemple en réseau.

Actuellement, le fonctionnement d'un appareil est le plus souvent commandé à partir d'un ou plusieurs interrupteurs et/ou potentiomètres, chacun étant alimenté électriquement le plus souvent, et incluant notamment un voyant lumineux ou autre, ce qui contribue à une grande consommation électrique.

Dans le cas d'un ensemble d'appareils connectés en réseau, avec des objets connectés qui peuvent être par exemple des capteurs transmettant des données par exemple par une liaison radiofréquence, il convient de prévoir autant de moyens d'alimentation électrique que de capteurs.

Même si dans certaines situations il n'est pas nécessaire d'alimenter électriquement un interrupteur ou un potentiomètre (par exemple un interrupteur d'une ampoule électrique dans un bâtiment), il reste nécessaire d'effectuer des tranchées dans un mur pour câbler l'interrupteur et le relier ainsi à l'ampoule électrique.

Le document **D1 :** WO2011/018562 propose une approche dans laquelle toutes les connexions habituelles (radiofréquences, filaires, ou autres) sont remplacées par une détection d'émission de sons caractéristiques. Une unité de traitement capte et reconnaît ces sons et délivre des consignes à des appareils pour les faire opérer en fonction des sons détectés. D1 propose plus particulièrement d'équiper un objet, à disposition d'un utilisateur, d'un haut-parleur. L'utilisateur appuie sur un bouton de cet objet pour émettre un son caractéristique via le haut-parleur, à la manière d'une « télécommande sonore ». Toutefois, une telle réalisation présente l'inconvénient d'une structure de télécommande relativement compliquée, nécessitant une alimentation électrique pour faire fonctionner le haut-parleur qu'elle comporte. En outre, cette réalisation présente aussi l'inconvénient d'une télécommande à avoir sur soi en permanence, ou à proximité tout au moins.

La présente invention vient améliorer la situation.

Elle propose à cet effet une installation pour une gestion d'un ou plusieurs appareils connectés à un équipement dans un environnement. L'équipement reçoit et interprète des signaux de l'environnement et, en fonction d'une interprétation des signaux, transmet aux appareils des consignes de réglage.

En particulier, l'installation comporte au moins un capteur sonore relié à l'équipement, ainsi qu'un ou plusieurs organes mécaniques dont l'actionnement de chacun, en vue du réglage d'un au moins des appareils, provoque l'émission d'un son caractéristique.

Un jeu de paramètres propres à ce son caractéristique est alors répertorié dans une table de correspondance, en tant que signature acoustique associée à l'organe mécanique ayant émis ce son caractéristique. Ainsi, la table de correspondance répertorie des consignes de réglage en fonction des signatures acoustiques associées aux organes mécaniques.

L'équipement précité est alors agencé pour :
- recevoir des signaux sonores de l'environnement,
- comparer chaque signal sonore aux signatures acoustiques de la table de correspondance,
- et transmettre au moins une consigne de réglage d'un appareil en fonction d'au moins une signature acoustique de la table, identifiée dans un signal sonore reçu.

Ainsi, la présente invention utilise le son produit par un organe mécanique (son de type « clic » d'un interrupteur mécanique par exemple), et sa détection en particulier, pour interpréter un évènement lié à la production de ce son et en déduire une consigne de réglage d'un ou plusieurs appareils choisis.

Comme l'organe est mécanique, il n'est aucunement nécessaire de l'alimenter électriquement.

Ici, on entend par « consigne de réglage » aussi bien une commande émise à un simple dispositif, qu'un ensemble de consignes envoyées à différents équipements de l'installation pour réagir à un évènement lié à plusieurs signaux sonores reçus de l'environnement. Par exemple, le son d'une porte qui claque suivi d'un clic d'interrupteur localisé dans l'entrée d'un appartement peut signifier l'arrivée d'un occupant de cet appartement et déclencher la mise en route de l'éclairage de l'entrée au moins, ainsi que le lancement d'un répondeur téléphonique pour jouer sur haut-parleur les derniers messages téléphoniques laissés, allumer une chaîne hi-fi pour jouer une musique d'accueil, etc.

Ainsi, l'identification d'une signature sonore peut donner lieu à l'émission d'une commande à un simple dispositif, mais peut aussi servir à générer un événement typé dont l'interprétation déclenche un ou plusieurs traitements automatisés sur des dispositifs informatiques et /ou l'envoi d'une ou plusieurs commandes à destination d'un ou plusieurs dispositifs physiques.

Par ailleurs, on entend par « table de correspondance » aussi bien un enregistrement en mémoire d'associations prédéfinies entre une ou plusieurs signatures acoustiques, d'une part, et une ou plusieurs consignes de réglage d'appareils, d'autre part, que d'autres techniques d'association comme par exemple l'usage d'un mécanisme de courtage (ou "broker" en anglais) ou de « pattern matching » (pour une scène sonore complète notamment), ou encore d'analyse de similarité.

L'un au moins des organes mécaniques comporte au moins deux protubérances en regard l'une de l'autres, de sorte que l'actionnement de l'organe provoque un frottement entre les deux protubérances, ce frottement produisant un son caractéristique de l'organe.

Il s'agit d'une solution mécanique avantageuse, ne nécessitant aucun apport électrique, et le son peut être provoqué ainsi par simple actionnement d'un utilisateur.

Dans une telle réalisation, l'une des protubérances peut comporter par exemple au moins une première et une deuxième lamelle élastique (par exemple des lamelles métalliques comme dans une boîte à musique), différentes, de positions respectives décalées par rapport à l'autre protubérance. Ainsi, l'actionnement de l'organe mécanique dans un premier sens provoque la vibration de la première lamelle puis de la deuxième lamelle, produisant un son caractéristique de l'actionnement de l'organe dans le premier sens, tandis que l'actionnement de l'organe mécanique dans un deuxième sens provoque la vibration de la deuxième lamelle puis de la première lamelle, produisant un son caractéristique de l'actionnement de l'organe dans le deuxième sens, typiquement inverse du premier sens.

Une telle réalisation aussi simple permet de déterminer par exemple dans le cas d'un interrupteur si l'on allume ou si l'on éteint l'appareil associé.

Alternativement pour une fonction de potentiomètre par l'exemple, l'organe mécanique peut comporter une première protubérance en regard d'une pluralité de protubérances successives, le frottement de la première protubérance contre tout ou partie de la pluralité de protubérances successives produisant un son caractéristique de l'actionnement de l'organe mécanique.

Dans ce cas, l'équipement peut être configuré pour analyser une signature acoustique du son produit et compter un nombre de protubérances, parmi la pluralité de protubérances précitées, ayant frotté la première protubérance, et en déduire une amplitude de réglage d'une consigne associée à la signature acoustique du son produit dans la table de correspondance.

Dans une forme de réalisation, le capteur sonore peut être une antenne acoustique pour localiser la provenance d'un son et identifier un organe mécanique ayant émis ce son.

On entend ici par « antenne acoustique » un ensemble de capsules piézoélectriques (comme un microphone ambiophonique par exemple) pour capter un son avec sa direction d'arrivée et éventuellement localiser les différentes sources sonores dans une scène sonore correspondant à l'environnement sonore précité.

Une telle réalisation permet avantageusement de déterminer, par exemple dans le cas d'une pluralité d'interrupteurs ayant la même signature sonore (car par exemple fabriqués par une même industrie), de distinguer les différents organes en fonction de leurs positions respectives dans l'environnement sonore.

L'invention vise aussi un procédé de gestion d'un ou plusieurs appareils connectés à un équipement dans un environnement, dans lequel l'équipement reçoit et interprète des signaux de l'environnement et, en fonction d'une interprétation des signaux, transmet aux appareils des consignes de réglage. En particulier, l'environnement est sonore et comporte un ou plusieurs organes mécaniques dont l'actionnement de chacun, en vue du réglage d'un au moins des appareils, provoque l'émission d'un son caractéristique. Un jeu de paramètres propres à ce son caractéristique est alors répertorié dans une table de correspondance, en tant que signature acoustique associée à l'organe mécanique ayant émis le son caractéristique. Ainsi, la table de correspondance répertorie des consignes de réglage en fonction des signatures acoustiques associées aux organes mécaniques. L'équipement est alors relié à au moins un capteur sonore pour :
- recevoir des signaux sonores de l'environnement,
- comparer chaque signal sonore aux signatures acoustiques de la table de correspondance,
- et transmettre au moins une consigne de réglage d'un appareil en fonction d'au moins une signature acoustique de la table, identifiée dans un signal sonore reçu.

Le procédé comporte en préalable:
- actionner chaque organe mécanique et enregistrer un jeu de paramètres propres au signal sonore produit dans l'environnement par l'actionnement de l'organe mécanique et correspondant au son caractéristique précité qu'émet cet organe mécanique, et
- répertorier dans la table de correspondance chaque jeu de paramètres ainsi enregistré en tant que signature acoustique associée à l'organe mécanique ayant produit ledit signal sonore dans l' environnement.

Optionnellement, on peut disposer chaque organe mécanique et le capteur sonore à des positions respectives fixes dans l'environnement avant d'enregistrer les paramètres des signaux sonores précités, notamment lorsqu'il est souhaité d'enregistrer parmi ces paramètres une direction d'arrivée des sons.

Néanmoins, la détection d'une signature sonore définie par exemple par une enveloppe temporelle et des énergies respectives dans des bandes de fréquences choisies est suffisamment robuste habituellement aux déplacements de la source de cette signature sonore relativement à un capteur. Dans une réalisation en effet, chaque signature acoustique de la table de correspondance peut être définie par un jeu de paramètres comportant au moins l'un des éléments parmi une enveloppe de signal dans le temps et des niveaux d'énergie acoustique dans des bandes de fréquences respectives choisies. Ainsi, l'équipement, sur réception d'un signal sonore issu de l'environnement :
- estime une enveloppe dans le temps du signal et/ou applique une transformée temps fréquence au signal pour déterminer des énergies acoustiques dans des bandes de fréquences respectives, choisies,
- Et, de là, détermine un jeu de paramètres à comparer avec des jeux de paramètres des signatures acoustiques de la table de correspondance.

Dans une forme de réalisation où l'équipement comporte une interface homme machine configurée pour recevoir une entrée d'une consigne corrective de réglage, l'équipement peut corriger, par apprentissage, les consignes répertoriées dans la table de correspondance en fonction :
- des sons reçus de l'environnement, et
- de consignes correctives de réglage entrées via l'interface homme/machine dans un laps de temps, depuis un son reçu, inférieur à un seuil par exemple.

La présente invention vise aussi un programme informatique comportant des instructions pour la mise en oeuvre du procédé ci-avant, lorsque ces instructions sont exécutées par un processeur (ainsi qu'un support d'informations (une mémoire par exemple, telle qu'une clé USB ou autre) stockant de telles instructions).

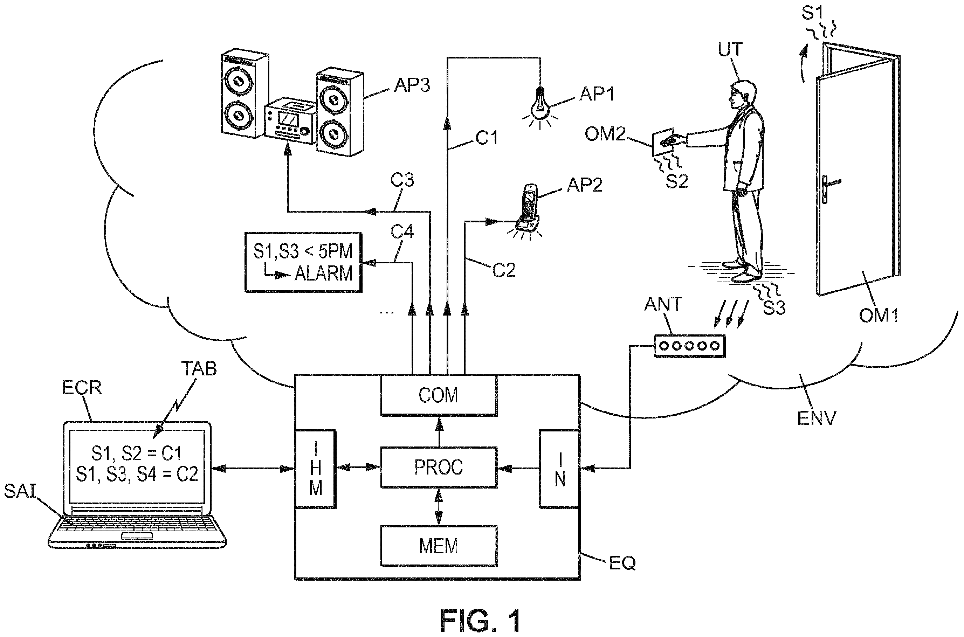

La présente invention vise aussi un équipement d'une installation décrite ci-avant, et comportant une interface pour recevoir des signaux sonores de l'environnement, et une unité de traitement (typiquement par exemple un processeur PROC coopérant avec une mémoire MEM, et une interface de communication COM, tels qu'illustrés sur la figure 1) pour :
- comparer chaque signal sonore à des signatures acoustiques prédéfinies dans une table de correspondance,
   la table de correspondance répertoriant des consignes de réglage en fonction des signatures acoustiques,
- et transmettre au moins une consigne de réglage d'un appareil en fonction d'au moins une signature acoustique de la table, identifiée dans un signal sonore reçu.

D'autres avantages et caractéristiques de l'invention apparaîtront à la lecture de la description détaillée des exemples de réalisation donnés ci-après, et à l'examen des dessins annexés, sur lesquels :
- la figure 1 illustre schématiquement un exemple d'installation au sens de la présente invention ;
- la figure 2 illustre schématiquement les différentes étapes d'un exemple de procédé au sens de la présente invention ;
- la figure 3 illustre un détail de la figure 2 pour la construction d'une signature numérique SGN à partir de signaux captés dans l'environnement, cette construction intervenant aux étapes ST1 et ST4 de la figure 2 ;
- la figure 4 illustre un exemple de réalisation d'un organe mécanique de type interrupteur ;
- la figure 5 illustre un exemple de réalisation d'un organe mécanique de type potentiomètre.

On se réfère à la figure 1 sur laquelle, dans l'exemple illustré, un utilisateur UT rentre dans son appartement. Il active un organe mécanique OM1 consistant en la porte de son appartement, pour la fermer, puis active un organe mécanique OM2 consistant en un interrupteur en vue d'allumer un appareil AP1 consistant en une ampoule électrique dans l'entrée de son appartement. L'installation au sens de l'invention comporte dans l'exemple illustré une antenne acoustique ANT, reliée à une interface d'entrée INT d'un équipement EQ comportant une unité de traitement capable de générer des consignes de commande C1, C2, C3, C4, ..., destinées à un ou plusieurs appareils AP1, AP2, AP3, ..., présents dans l'appartement de l'utilisateur UT (par exemple respectivement la lampe électrique AP1, un répondeur téléphonique AP2, une chaîne hi-fi AP3, etc.).

Plus particulièrement, l'actionnement des organes mécaniques OM1, OM2, par l'utilisateur UT, produit des sons caractéristiques (respectivement S1, S2) dans l'environnement acoustique ENV de l'appartement de l'utilisateur, lesquels sons S1, S2 sont captés par l'antenne acoustique ANT et interprétés par l'équipement EQ pour délivrer des consignes adaptées aux appareils AP1, AP2, etc. Par exemple ici, l'actionnement de l'organe mécanique OM2, typiquement sous la forme d'un interrupteur, produit un clic ou autre bruit S2, qui est capté par l'antenne ANT et interprété par l'équipement EQ comme l'actionnement mécanique de l'interrupteur OM2, en vue d'allumer l'ampoule électrique AP1 (consigne C1).

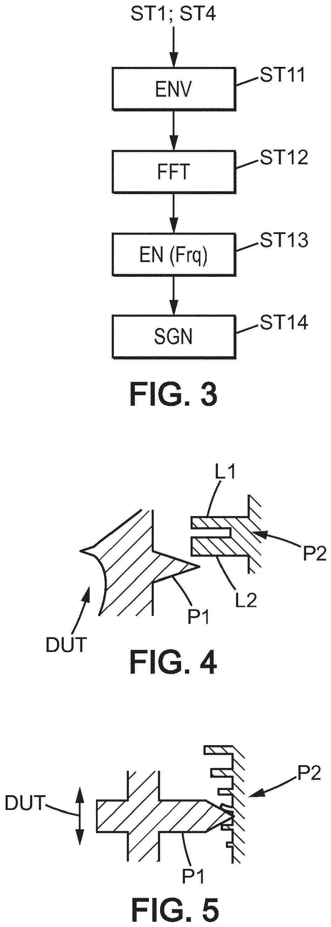

Dans l'exemple illustré, l'entrée de l'utilisateur UT dans l'appartement se traduit acoustiquement au moins par :
- la fermeture de la porte d'entrée OM1 et le bruit S1 ainsi généré, capté par l'antenne acoustique ANT,
- l'activation de l'interrupteur OM2 produisant le bruit S2 (clic ou autre comme présenté dans l'exemple de réalisation de la figure 4 commentée plus loin), capté par l'antenne acoustique ANT.

A titre d'exemple, l'enchaînement des sons S1 et S2 (avec éventuellement le son S3 entre S1 et S2) est interprété par l'équipement EQ comme l'arrivée de l'utilisateur dans son appartement, de sorte que l'équipement EQ peut transmettre une série de consignes C1, C2 et C3 aux appareils AP1, AP2, AP3 : par exemple allumer l'ampoule AP1, lire les messages téléphoniques reçus par le répondeur téléphonique AP2 en l'absence de l'utilisateur, et respectivement faire jouer à la chaîne hi-fi AP3 une musique préprogrammée d'accueil.

Il convient de remarquer qu'un son capté et interprété peut être généré par un organe mécanique ad hoc, conçu spécifiquement pour la mise en oeuvre de l'invention, comme l'interrupteur OM2, ou encore par un organe mécanique quelconque, usuel, produisant un son caractéristique comme le claquement d'une porte d'entrée ou autre. Ainsi, dans l'exemple illustré sur la figure 1, les pas de l'utilisateur UT produisent un son S3 qui peut être capté et interprété pour détecter une présence, typiquement.

L'antenne acoustique ANT peut comporter plusieurs capsules piézoélectriques pour capter différents sons dans l'environnement, et distinguer des directions d'arrivée de ces sons, en localisant alors les sources ayant émis ces sons. Une telle réalisation permet typiquement de distinguer des organes mécaniques (interrupteurs typiquement), émettant un même son caractéristique mais en des lieux distincts.

Il convient de remarquer en outre que le choix des consignes C1, C2, ... peut ne pas dépendre uniquement de la détection de sons prédéfinis (ou d'un enchaînement prédéfini de sons), mais peut être lié à d'autres paramètres. Dans l'exemple de la figure 1, la détection des sons S1 et S3 peut provoquer l'accueil de l'utilisateur (avec les consignes C1 à C3 décrites précédemment), ou encore déclencher une alarme selon la consigne C4 si la détection de ces sons S1, S3 intervient dans une plage horaire prédéfinie (par exemple entre neuf et dix-sept heures).

Bien entendu, le choix de ces différentes consignes peut être paramétré par l'utilisateur UT, par exemple via une interface homme machine IHM que comporte l'équipement EQ (relié par exemple à un écran d'affichage ECR et des moyens de saisie SAI, par exemple un écran tactile d'une tablette ou autre). Ainsi, l'utilisateur peut constituer une table de correspondance TAB entre :
- les différents sons détectés dans l'environnement acoustique (S1, S2) ; (S1, S2, S4) ; etc. avec éventuellement une définition de l'enchaînement de ces sons (par exemple le son S2 suit le son S1 moins de cinq secondes plus tard), d'une part
- et différentes consignes de commande C1, C2, etc. pour les appareils AP1, AP2, etc. ;

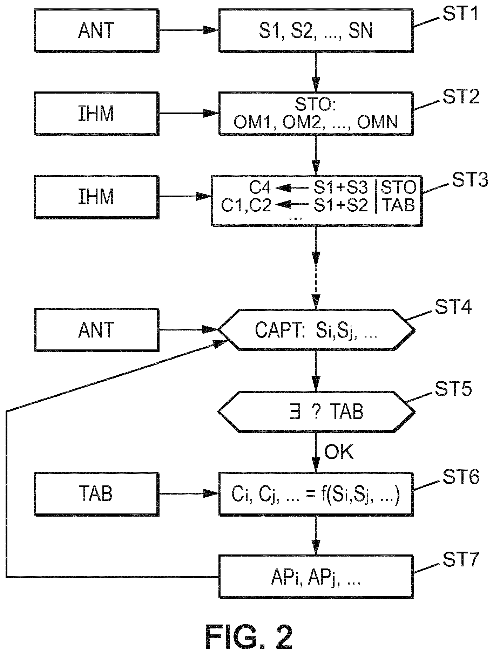

L'équipement EQ peut comporter, outre l'interface INT de réception des signaux sonores captés et cette interface IHM, une unité de traitement comportant typiquement :
- une interface de communication COM pour transmettre les consignes C1, C2, etc. aux différents appareils AP1, AP2, etc. ;
- une mémoire MEM stockant typiquement les données d'instructions d'un programme informatique au sens de l'invention, ainsi que les données de la table de correspondance TAB par exemple (et éventuellement des signatures acoustiques permettant d'identifier les sons captés dans l'environnement ENV, comme décrit plus loin en référence aux figures 2 et 3),
- un processeur PROC, coopérant avec la mémoire MEM, notamment pour lire les instructions du programme informatique et exécuter le procédé de l'invention, dont un exemple de réalisation est décrit ci-après en référence à la figure 2.

On se réfère ainsi à la figure 2 sur laquelle, au cours d'une première étape préalable ST1, l'utilisateur active lui-même mécaniquement les différents organes de l'installation OM1, OM2, etc., afin que les sons produits par les organes mécaniques soient captés par l'antenne acoustique ANT. L'utilisateur peut piloter en outre via l'interface IHM l'enregistrement à l'étape ST2 des sons ainsi captés dans la mémoire MEM, en correspondance par exemple des différents organes mécaniques associés à ces sons, comme par exemple :
- S1 : fermeture de la porte d'entrée ;
- S2 : interrupteur de l'entrée en mode « ON » ;
- S3 : pas d'homme sur le parquet de l'entrée ; etc.

A l'étape suivante ST3, l'utilisateur peut définir lui-même sa table de correspondance TAB via l'interface IHM, en assignant par exemple :
- la consigne d'alarme C4 à la succession de sons détectés : « fermeture porte d'entrée » et « bruits de pas dans l'entrée », sans « activation de l'organe mécanique OM2 dans l'entrée »,
- la succession de consignes C1, C2 (lumière dans l'entrée AP1, et lecture des messages en absences AP2) à la succession de sons détectés : « fermeture porte d'entrée » et « activation de l'organe mécanique OM2 dans l'entrée », après 17h00 par exemple,
   Etc.

Cette table de correspondance TAB peut être stockée ensuite dans la mémoire MEM.

Ces étapes ST1, ST2 et ST3 sont préalables à un traitement courant qu'opère l'équipement EQ, décrit ci-après.

Ensuite, si des signaux sonores Si, Sj sont captés dans l'environnement par l'antenne ANT à l'étape ST4, l'équipement EQ détermine si ces signaux sonores présentent une similarité avec des sons préenregistrés dans la mémoire MEM et présents dans la table de correspondance TAB à l'étape ST5, et le cas échéant détermine à l'étape ST6 les consignes Ci, Cj, ..., associées aux sons détectés, ou l'enchaînement des sons détectés Si, Sj, etc. à transmettre à l'étape ST7 aux appareils correspondants APi, APj, etc.

Les sons stockés dans la mémoire MEM peuvent être sous la forme de fichiers sons (format wav, mp3 ou autre), ou alternativement sous la forme de jeux de paramètres, chaque jeu caractérisant un son comme une « signature acoustique » d'un évènement (un jeu associé à la porte d'entrée qui claque, un jeu associé à l'activation de l'interrupteur OM2, etc.). Chaque jeu peut comporter des paramètres tels que :
- la définition d'une enveloppe temporelle (temps de montée du son, temps de décroissance, amplitude maximale par rapport à une référence, etc.),
- le contenu (par exemple en énergie et/ou en variation d'énergie) dans des bandes de fréquences successives, choisies,
- la direction d'arrivée du son (détectée grâce à l'antenne),
et/ou autres paramètres acoustiques.

En référence à la figure 3, on peut prévoir alors que ces paramètres s'obtiennent après la captation des signaux sonores aux étapes ST1 et ST4, par la détermination de l'enveloppe temporelle du signal sonore à l'étape ST11, par l'application d'une transformée de Fourier (type FFT) à l'étape ST12 pour déterminer typiquement une répartition d'énergie par bande de fréquences frq à l'étape ST13.

De tels paramètres caractérisent le son capté, ce qui permet de lui assigner à l'étape ST14 une signature acoustique SGN qui peut être répertoriée dans la table de correspondance TAB.

De tels paramètres définissant la signature sonore d'un événement offrent une détection robuste de l'évènement, de sorte que les sons peuvent être reconnus, même dans un environnement bruité (avec des voix ou d'autres bruits qui ne sont pas nécessairement répertoriés dans la table TAB).

Bien entendu, la conception des organes mécaniques ad hoc pour la commande, via une onde sonore, d'un appareil peut être choisie pour offrir des signatures acoustiques optimisées.

Ainsi, en référence à la figure 4, on peut prévoir un interrupteur de type binaire en mode « ON » ou « OFF », dont l'actionnement mécanique par un utilisateur (flèche DUT) produit un son caractéristique, comme suit. L'interrupteur comporte :
- une protubérance P1, apte à se déplacer sous l'impulsion de l'actionnement mécanique DUT,
- deux lamelles élastiques L1 et L2, par exemple métalliques (comme dans une boîte à musique) que porte une autre protubérance P2 en regard de la première protubérance P1.

En particulier, les deux lamelles L1 et L2 sont différentes (par exemple d'épaisseurs différentes).

Ainsi, lorsque la protubérance P1 se déplace vers le haut (dans l'exemple de la figure 4), la lamelle L1 vibre avant la lamelle L2, ce qui produit un enchaînement caractéristique de sons correspondant à cette succession de vibrations définissant le mode « ON » de l'interrupteur, dans la table TAB.

En revanche, lorsque la protubérance P1 se déplace vers le bas, la lamelle L1 vibre après la lamelle L2, ce qui produit un enchaînement caractéristique de sons définissant le mode « OFF » de l'interrupteur, dans la table TAB.

On a illustré sur la figure 5 une réalisation dans laquelle l'organe mécanique est un potentiomètre et comporte la protubérance P1, cette fois en regard d'une succession de lamelles élastiques distinctes (métalliques par exemple) que porte une deuxième protubérance P2. Ainsi, le déplacement de la protubérance P1 relativement à protubérance P2 vers le bas (flèche DUT de la figure 5 vers le bas) produit une succession de sons caractéristiques de plus en plus aigus (par exemple pour augmenter l'amplitude d'un réglage, tel que le volume de la chaîne hifi typiquement), tandis que le déplacement de la protubérance P1 relativement à protubérance P2 vers le haut (flèche DUT de la figure 5 vers le haut) produit une succession de sons caractéristiques de plus en plus graves (par exemple pour diminuer le volume de la chaîne hifi).

Bien entendu, la présente invention ne se limite pas aux formes de réalisation décrites ci-avant à titre d'exemple ; elle s'étend à d'autres variantes.

Ainsi, on comprendra que les organes mécaniques représentés comme répondant à un réglage linéaire sur les figures 4 et 5 peuvent être en variante des organes rotatifs.

Par ailleurs, d'autres consignes que celles illustrées à titre d'exemple sur la figure 1 peuvent être prévues selon l'application de l'invention. Par exemple, l'installation peut être mise en service dans un environnement différent de celui d'un appartement, et par exemple en usine industrielle dans laquelle des sons caractéristiques détectés (différence de bruit d'une perceuse dans un matériau différent, par exemple) peuvent déclencher des actions spécifiques d'appareils (arrêt de la rotation de la perceuse).

## Revendications

1. Installation pour une gestion d'un ou plusieurs appareils connectés à un équipement dans un environnement, dans laquelle l'équipement reçoit et interprète des signaux de l'environnement et, en fonction d'une interprétation des signaux, transmet aux appareils des consignes de réglage, L'installation comportant au moins un capteur sonore relié à l'équipement, et un ou plusieurs organes mécaniques dont l'actionnement de chacun, en vue du réglage d'un au moins des appareils, provoque l'émission d'un son caractéristique, un jeu de paramètres propres audit son caractéristique étant répertorié dans une table de correspondance, en tant que signature acoustique associée à l'organe mécanique émettant le son caractéristique, la table de correspondance répertoriant ainsi des consignes de réglage en fonction desdites signatures acoustiques associées aux organes mécaniques,
L'équipement étant agencé pour :
- recevoir des signaux sonores de l'environnement,
- comparer chaque signal sonore aux signatures acoustiques de la table de correspondance,
- et transmettre au moins une consigne de réglage d'un appareil en fonction d'au moins une signature acoustique de la table, identifiée dans un signal sonore reçu, et l'un au moins des organes mécaniques comportant au moins deux protubérances en regard l'une de l'autre, l'actionnement de l'organe provoquant un frottement entre les deux protubérances, le frottement produisant un son caractéristique de l'organe.

2. Installation selon la revendication 1, **caractérisée en ce que** l'une des protubérances comporte au moins une première et une deuxième lamelle élastique, différentes, de positions respectives décalées par rapport à l'autre protubérance, et l'actionnement de l'organe mécanique dans un premier sens provoque la vibration de la première lamelle puis de la deuxième lamelle, produisant un son caractéristique de l'actionnement de l'organe dans le premier sens, tandis que l'actionnement de l'organe mécanique dans un deuxième sens provoque la vibration de la deuxième lamelle puis de la première lamelle, produisant un son caractéristique de l'actionnement de l'organe dans le deuxième sens.

3. Installation selon la revendication 1, **caractérisée en ce que** l'organe mécanique comporte une première protubérance en regard d'une pluralité de protubérances successives, le frottement de la première protubérance contre tout ou partie de la pluralité de protubérances successives produisant un son caractéristique de l'actionnement de l'organe mécanique.

4. Installation selon la revendication 3, **caractérisée en ce que** l'équipement est configuré pour analyser une signature acoustique du son produit et compter un nombre de protubérances, parmi ladite pluralité de protubérances, ayant frotté la première protubérance, et en déduire une amplitude de réglage d'une consigne associée la signature acoustique du son produit dans la table de correspondance.

5. Installation selon l'une des revendications précédentes, **caractérisée en ce que** le capteur sonore est une antenne acoustique pour localiser la provenance d'un son et identifier un organe mécanique ayant émis ce son.

6. Equipement d'une installation selon l'une des revendications précédentes, comportant une interface (IN) pour recevoir des signaux sonores de l'environnement, et une unité de traitement (PROC, MEM, COM) pour :
- comparer chaque signal sonore aux signatures acoustiques de la table de correspondance, la table de correspondance répertoriant des consignes de réglage en fonction desdites signatures acoustiques,
- et transmettre au moins une consigne de réglage d'un appareil en fonction d'au moins une signature acoustique de la table, identifiée dans un signal sonore reçu,
la table de correspondance répertoriant au moins une consigne de réglage en fonction d'une signature acoustique d'un son caractéristique d'un organe mécanique comportant au moins deux protubérances en regard l'une de l'autre,
L'unité de traitement étant configurée pour identifier la signature acoustique du son caractéristique issu dudit organe mécanique.

7. Procédé de gestion d'un ou plusieurs appareils connectés à un équipement dans un environnement, dans lequel l'équipement reçoit et interprète des signaux de l'environnement et, en fonction d'une interprétation des signaux, transmet aux appareils des consignes de réglage, L'environnement étant sonore et comportant au moins un organe mécanique comportant au moins deux protubérances en regard l'une de l'autres, l'actionnement de l'organe provoquant un frottement entre les deux protubérances, le frottement produisant un son caractéristique de l'organe, en vue du réglage d'un au moins des appareils,
un jeu de paramètres propres audit son caractéristique étant répertorié dans une table de correspondance, en tant que signature acoustique associée à l'organe mécanique émettant le son caractéristique, la table de correspondance répertoriant ainsi des consignes de réglage en fonction desdites signatures acoustiques associées aux organes mécaniques,
Le procédé comprenant en outre les étapes suivantes:
l'équipement est relié à au moins un capteur sonore pour :
- recevoir des signaux sonores de l'environnement,
- comparer chaque signal sonore aux signatures acoustiques de la table de correspondance,
- et transmettre au moins une consigne de réglage d'un appareil en fonction d'au moins une signature acoustique de la table, identifiée dans un signal sonore reçu.

8. Procédé selon la revendication 7, **caractérisé en ce qu'**il comporte en préalable:
- actionner chaque organe mécanique et enregistrer un jeu de paramètres propres au signal sonore produit dans l'environnement par l'actionnement de l'organe mécanique et correspondant au son caractéristique émis par cet organe mécanique, et
- répertorier dans la table de correspondance chaque jeu de paramètres ainsi enregistré en tant que signature acoustique associée à l'organe mécanique ayant produit ledit signal sonore dans l'environnement.

9. Procédé selon l'une des revendications 7 et 8, **caractérisé en ce que** chaque signature acoustique de la table de correspondance est définie par un jeu de paramètres comportant au moins l'un des éléments parmi une enveloppe de signal dans le temps et des niveaux d'énergie acoustique dans des bandes de fréquences respectives choisies,
et **en ce que** l'équipement, sur réception d'un signal sonore issu de l'environnement :
- estime une enveloppe dans le temps du signal et/ou applique une transformée temps fréquence au signal pour déterminer des énergies acoustiques dans des bandes de fréquences respectives, choisies,
- Et, de là, détermine un jeu de paramètres à comparer avec des jeux de paramètres des signatures acoustiques de la table de correspondance.

10. Procédé selon l'une des revendications 7 à 9, **caractérisé en ce que**, l'équipement comportant une interface homme machine configurée pour recevoir une entrée d'une consigne corrective de réglage,
l'équipement corrige, par apprentissage, les consignes répertoriées dans la table de correspondance en fonction :
- des sons reçus de l'environnement, et
- de consignes correctives de réglage entrées via l'interface homme/machine dans un laps de temps inférieur à un seuil depuis un son reçu.

11. Programme informatique comportant des instructions pour la mise en oeuvre du procédé selon l'une des revendications 7 à 10, lorsque lesdites instructions sont exécutées par un processeur.

## Patentansprüche

1. Anlage zur Steuerung eines oder mehrerer Geräte, die mit einer Ausrüstung in einer Umgebung verbunden sind, wobei die Ausrüstung Signale aus der Umgebung empfängt und auswertet und auf der Grundlage einer Auswertung der Signale Einstellanweisungen an die Geräte weiterleitet,
wobei die Anlage mindestens einen Schallsensor aufweist, der mit der Ausrüstung verbunden ist, und ein oder mehrere mechanische Organe aufweist, deren Betätigung hinsichtlich des Einstellens von mindestens einem der Geräte die Ausgabe eines charakteristischen Klangs bewirkt,
einen Satz von Parametern, die dem charakteristischen Klang entsprechen, der in einer Zuordnungstabelle als akustische Signatur aufgelistet wird, die dem mechanischen Organ zugeordnet ist, das den charakteristischen Klang ausgibt, wobei die Zuordnungstabelle somit Einstellanweisungen in Abhängigkeit von den akustischen Signaturen, die den mechanischen Organen zugeordnet sind, auflistet, wobei die Ausrüstung für Folgendes eingerichtet ist:
- Empfangen von Schallsignalen aus der Umgebung,
- Vergleichen jedes Schallsignals mit den akustischen Signaturen in der Zuordnungstabelle,
- und Übertragen von mindestens einer Anweisung zum Einstellen eines Geräts in Abhängigkeit von mindestens einer akustischen Signatur der Tabelle, die in einem empfangenen Schallsignal identifiziert wird,
wobei mindestens eines der mechanischen Organe mindestens zwei einander gegenüberliegende Vorsprünge aufweist, wobei die Betätigung des Organs eine Reibung zwischen den beiden Vorsprüngen hervorruft, wobei die Reibung einen für das Organ charakteristischen Klang erzeugt.

2. Anlage nach Anspruch 1, **dadurch gekennzeichnet, dass** einer der Vorsprünge mindestens eine erste und eine zweite, unterschiedliche, elastische Lamelle aufweist, deren jeweilige Positionen in Bezug auf den andere Vorsprung versetzt ist, und die Betätigung des mechanischen Organs in einer ersten Richtung die Vibration der ersten Lamelle und dann der zweiten Lamelle bewirkt, wobei ein Klang erzeugt wird, der für die Betätigung des Organs in der ersten Richtung charakteristisch ist, während die Betätigung des mechanischen Organs in einer zweiten Richtung die Vibration der zweiten Lamelle und dann der ersten Lamelle bewirkt, wodurch ein Klang erzeugt wird, der für die Betätigung des Organs in der zweiten Richtung charakteristisch ist.

3. Anlage nach Anspruch 1, **dadurch gekennzeichnet, dass** das mechanische Organ einen ersten Vorsprung in Anbetracht einer Vielzahl von aufeinanderfolgenden Vorsprüngen aufweist, wobei die Reibung des ersten Vorsprungs gegen die Gesamtheit oder einen Teil der Vielzahl von aufeinanderfolgenden Vorsprüngen einen für die Betätigung des mechanischen Organs charakteristischen Klang erzeugt.

4. Anlage nach Anspruch 3, **dadurch gekennzeichnet, dass** die Ausrüstung so konfiguriert ist, dass sie eine akustische Signatur des erzeugten Klangs analysiert und eine Anzahl von Vorsprüngen aus der Vielzahl von Vorsprüngen zählt, die sich am ersten Vorsprung gerieben haben, und daraus eine Amplitude zum Einstellen einer Anweisung ableitet, die der akustischen Signatur des erzeugten Klangs in der Zuordnungstabelle zugeordnet ist.

5. Anlage nach einem der vorhergehenden Ansprüche, **dadurch gekennzeichnet, dass** der Schallsensor eine akustische Antenne ist, um die Herkunft eines Klangs zu lokalisieren und ein mechanisches Organ zu identifizieren, das diesen Klang ausgegeben hat.

6. Ausrüstung einer Anlage nach einem der vorhergehenden Ansprüche mit einer Schnittstelle zum Empfangen von Schallsignalen aus der Umgebung und einer Verarbeitungseinheit (PROC, MEM, COM) zum:
- Vergleichen jedes Schallsignals mit den akustischen Signaturen in der Zuordnungstabelle, wobei die Zuordnungstabelle Einstellanweisungen in Abhängigkeit von den akustischen Signaturen auflistet,
- und Übertragen von mindestens einer Anweisung zum Einstellen eines Geräts in Abhängigkeit von mindestens einer akustischen Signatur der Tabelle, die in einem empfangenen Schallsignal identifiziert wird, wobei die Zuordnungstabelle mindestens eine Einstellanweisung in Abhängigkeit von einer akustischen Signatur eines charakteristischen Klangs eines mechanischen Organs auflistet, das mindestens zwei einander gegenüberliegende Vorsprünge aufweist, wobei die Verarbeitungseinheit so konfiguriert ist, dass sie die akustische Signatur des charakteristischen Klangs, der von dem mechanischen Organ ausgeht, identifiziert.

7. Verfahren zur Steuerung eines oder mehrerer Geräte, die mit einer Ausrüstung in einer Umgebung verbunden sind, wobei die Ausrüstung Signale aus der Umgebung empfängt und auswertet und auf der Grundlage einer Auswertung der Signale Einstellanweisungen an die Geräte weiterleitet, wobei die Umgebung akustisch ist und mindestens ein mechanisches Organ aufweist, das mindestens zwei einander gegenüberliegende Vorsprünge aufweist, wobei die Betätigung des Organs eine Reibung zwischen den beiden Vorsprüngen hervorruft, wobei die Reibung hinsichtlich des Einstellens von mindestens einem der Geräte einen für das Organ charakteristischen Klang erzeugt, wobei ein Satz von Parametern, die dem charakteristischen Klang entsprechen, in einer Zuordnungstabelle als akustische Signatur aufgelistet wird, die dem mechanischen Organ zugeordnet ist, das den charakteristischen Klang ausgibt, wobei die Zuordnungstabelle somit Einstellanweisungen in Abhängigkeit von den akustischen Signaturen, die den mechanischen Organen zugeordnet sind, auflistet, wobei das Verfahren darüber hinaus die folgenden Schritte aufweist:
Die Ausrüstung ist mit mindestens einem Schallsensor verbunden zum:
- Empfangen von Schallsignalen aus der Umgebung,
- Vergleichen jedes Schallsignals mit den akustischen Signaturen in der Zuordnungstabelle,
- und Übertragen von mindestens einer Anweisung zum Einstellen eines Geräts in Abhängigkeit von mindestens einer akustischen Signatur der Tabelle, die in einem empfangenen Schallsignal identifiziert wird.

8. Verfahren nach Anspruch 7, **dadurch gekennzeichnet, dass** es zunächst Folgendes aufweist:
- Betätigen jedes der mechanischen Organe und Aufzeichnen eines Satzes von Parametern, die dem Schallsignal entsprechen, das in der Umgebung durch die Betätigung des mechanischen Organs erzeugt wird und dem charakteristischen Klang entspricht, der von diesem mechanischen Organ abgegeben wird, und
- Auflisten in der Zuordnungstabelle jedes so aufgezeichneten Satzes von Parametern als akustische Signatur, die dem mechanischen Organ zugeordnet ist, das das Schallsignal in der Umgebung erzeugt hat.

9. Verfahren nach einem der Ansprüche 7 und 8, **dadurch gekennzeichnet, dass** jede akustische Signatur der Zuordnungstabelle durch einen Satz von Parametern definiert wird, der mindestens eines der Elemente aus einer Signalhüllkurve im Zeitbereich und akustische Energiepegel in jeweils ausgewählten Frequenzbändern aufweist, und dass die Ausrüstung bei Empfang eines Schallsignals aus der Umgebung:
- eine Hüllkurve im Zeitbereich des Signals abschätzt und/oder eine Zeit-Frequenz-Transformation auf das Signal anwendet, um akustische Energien in jeweiligen ausgewählten Frequenzbändern zu bestimmen,
- und daraus einen Satz von Parametern bestimmt, der mit Parametersätzen der akustischen Signaturen in der Zuordnungstabelle verglichen werden soll.

10. Verfahren nach einem der Ansprüche 7 bis 9, **dadurch gekennzeichnet, dass**, da die Ausrüstung eine Mensch-Maschine-Schnittstelle aufweist, die so konfiguriert ist, dass sie eine Eingabe einer korrigierenden Einstellanweisung empfängt, die Ausrüstung durch Lernen die in der Zuordnungstabelle aufgelisteten Einstellanweisungen korrigiert in Abhängigkeit von:
- aus der Umgebung empfangenen Klängen und
- korrigierenden Einstellanweisungen, die über die Mensch-Maschine-Schnittstelle innerhalb eines Zeitraums nach einem empfangenen Klang eingegeben werden, der kleiner als ein Schwellenwert ist.

11. Computerprogramm mit Anweisungen zum Durchführen des Verfahrens nach einem der Ansprüche 7 bis 10, wenn die Anweisungen von einem Prozessor ausgeführt werden.

## Claims

1. Installation for managing one or more devices connected to an equipment in an environment, wherein the equipment receives and interprets signals from the environment and, based on an interpretation of the signals, transmits control instructions to the devices, the installation comprising at least one sound sensor connected to the equipment, and one or more mechanical members the actuation of each of which, with a view to controlling at least one of the devices, brings about the emission of a characteristic sound,
a set of parameters specific to said characteristic sound being listed in a lookup table, as an acoustic signature associated with the mechanical member emitting the characteristic sound, the lookup table thus listing control instructions as a function of said acoustic signatures associated with the mechanical members,
the equipment being designed to:
- receive sound signals from the environment,
- compare each sound signal with the acoustic signatures in the lookup table,
- and transmit at least one control instruction for a device on the basis of at least one acoustic signature in the table, identified in a received sound signal, and at least one of the mechanical members comprising at least two protuberances facing one another, the actuation of the member creating friction between the two protuberances, the friction producing a characteristic sound of the member.

2. Installation according to Claim 1, **characterized in that** one of the protuberances comprises at least a first and a second elastic strip that are different and have respective positions that are offset with respect to the other protuberance, and the actuation of the mechanical member in a first direction brings about the vibration of the first strip and then of the second strip, producing a sound characteristic of the actuation of the member in the first direction, whereas the actuation of the mechanical member in a second direction brings about the vibration of the second strip and then of the first strip, producing a sound characteristic of the actuation of the member in the second direction.

3. Installation according to Claim 1, **characterized in that** the mechanical member comprises a first protuberance facing a plurality of successive protuberances, the friction of the first protuberance against all or some of the plurality of successive protuberances producing a sound characteristic of the actuation of the mechanical member.

4. Installation according to Claim 3, **characterized in that** the equipment is configured to analyse an acoustic signature of the produced sound and count a number of protuberances, from among said plurality of protuberances, that have rubbed against the first protuberance, and deduce therefrom a control amplitude of an instruction associated with the acoustic signature of the produced sound in the lookup table.

5. Installation according to one of the preceding claims, **characterized in that** the sound sensor is an acoustic antenna for locating the origin of a sound and identifying a mechanical member that emitted this sound.

6. Equipment for an installation according to one of the preceding claims, comprising an interface (IN) for receiving sound signals from the environment, and a processing unit (PROC, MEM, COM) for:
- comparing each sound signal with the acoustic signatures in the lookup table, the lookup table listing control instructions as a function of said acoustic signatures,
- and transmitting at least one control instruction for a device on the basis of at least one acoustic signature in the table, identified in a received sound signal, the lookup table listing at least one control instruction as a function of an acoustic signature of a characteristic sound of a mechanical member comprising at least two protuberances facing one another,
the processing unit being configured to identify the acoustic signature of the characteristic sound from said mechanical member.

7. Method for managing one or more devices connected to an equipment in an environment, wherein the equipment receives and interprets signals from the environment and, based on an interpretation of the signals, transmits control instructions to the devices, the environment being a sound environment and comprising at least one mechanical member comprising at least two protuberances facing one another, the actuation of the member creating friction between the two protuberances, the friction producing a characteristic sound of the member, with a view to controlling at least one of the devices,
a set of parameters specific to said characteristic sound being listed in a lookup table, as an acoustic signature associated with the mechanical member emitting the characteristic sound, the lookup table thus listing control instructions as a function of said acoustic signatures associated with the mechanical members,
the method furthermore comprising the following steps:
the equipment is connected to at least one sound sensor in order to:
- receive sound signals from the environment,
- compare each sound signal with the acoustic signatures in the lookup table,
- and transmit at least one control instruction for a device on the basis of at least one acoustic signature in the table, identified in a received sound signal.

8. Method according to Claim 7, **characterized in that** it comprises, beforehand:
- actuating each mechanical member and recording a set of parameters specific to the sound signal produced in the environment by the actuation of the mechanical member and corresponding to the characteristic sound emitted by this mechanical member, and
- listing, in the lookup table, each set of parameters thus recorded as an acoustic signature associated with the mechanical member that produced said sound signal in the environment.

9. Method according to either of Claims 7 and 8, **characterized in that** each acoustic signature in the lookup table is defined by a set of parameters comprising at least one of the elements from among a signal envelope over time and acoustic energy levels in chosen respective frequency bands,
and **in that** the equipment, upon receiving a sound signal from the environment:
- estimates an envelope over time of the signal and/or applies a time/frequency transform to the signal in order to determine acoustic energies in respective frequency bands that are chosen,
- and, on that basis, determines a set of parameters to be compared with sets of parameters of the acoustic signatures in the lookup table.

10. Method according to one of Claims 7 to 9, **characterized in that**, the equipment comprising a human-machine interface configured to receive an input of a corrective control instruction,
the equipment, through learning, corrects the instructions listed in the lookup table on the basis of:
- the sounds received from the environment, and
- corrective control instructions entered via the human-machine interface within a time period shorter than a threshold since a received sound.

11. Computer program comprising instructions for implementing the method according to one of Claims 7 to 10 when said instructions are executed by a processor.
